# EUROPEAN PATENT SPECIFICATION

(11) **EP 1 821 556 B1**
(45) Date of publication and mention of the grant of the patent: **28.10.2015**
(21) Application number: 07101022.7
(22) Date of filing: 23.01.2007
(51) Int. Cl.: H04B 1/40, H04W 52/02, H04B 1/401

(54) **Power control method of wireless terminal**
Leistungssteuerungsverfahren für ein drahloses Endgerät
Procédé de contrôle de la puissance d'un terminal sans fil

(30) Priority: 21.02.2006 KR 20060016707
(43) Date of publication of application: 22.08.2007
(60) Divisional application: 15186283.6
(73) Proprietor: Samsung Electronics Co., Ltd., Suwon-si, Gyeonggi-do, 443-742 (KR)
(72) Inventor: Kim, Kwan-Sic, Yeongtong-gu, Suwon-si, Gyeonggi-do (KR)
(74) Representative: Grünecker Patent- und Rechtsanwälte PartG mbB

(56) References cited:
- WO-A1-00/24132
- GB-A- 2 389 279
- US-A1- 2001 016 502
- US-A1- 2002 120 852

## Description

The present invention relates generally to a power control method of a wireless terminal, and in particular, to a power control method of a wireless terminal to control power of the wireless terminal when a Subscriber Identity Module (SIM) card, which can be directly inserted/removed, is removed in a power-on state of the wireless terminal.

In general, a Subscriber Identity Module (SIM) card is inserted in a rear side of a battery of a wireless terminal. To remove the SIM card from the wireless terminal, the battery must be first removed from the wireless terminal, and then the SIM card can be removed. Therefore, the wireless terminal from which the SIM card has been removed in a power-off state can be stabilized.

GB-A-2389279 discloses a portable cellular phone capable of mounting a UIM (User Identity Module) card and being capable of reducing a number of times user data is read or written from or to the UIM card.

However, in a case of a wireless terminal using a SIM card which can be directly inserted / removed, the SIM card may be removed in a power-on state of the wireless terminal due to a mistake of a user. If the SIM card is removed in a power-on state of the wireless terminal, programs of the wireless terminal will often malfunction or become in an error or disorder state.

The present invention is designed to substantially solve at least the above problems and/or disadvantages and to provide at least the advantages below. Accordingly, the object of the present invention is to provide a wireless terminal and a power control method to control power of the wireless terminal when a Subscriber Identity Module (SIM) card, which can be directly inserted/removed, is removed in a power-on state of the wireless terminal.

This object is solved by the subject matter of the independent claims.

Preferred embodiments are defined in the dependent claims.

According to one aspect of the present invention, there is provided a method of controlling power in a wireless terminal having a Subscriber Identity Module (SIM) card which can be directly inserted/removed, including determining whether the SIM card is removed in a power-on state of the wireless terminal; and, if the SIM card is removed from the wireless terminal in the power-on state, a controller senses an error mode using an interrupt and controls power control signals for controlling power of the wireless terminal to be changed to a power-off state. In the method the power-off state of the wireless terminal may be achieved by changing power control signals for controlling the power of the wireless terminal to a power-off mode. In the method the power control signals of the wireless terminal may comprise a power on/off control signal, a key input power control signal, a battery control signal, a power supply control signal, and a reset control signal. According to another aspect of the present invention, there is provided a corresponding wireless terminal for carrying out the above method comprising a controller adapted for determining whether a SIM card is removed from the wireless terminal, adapted for sensing an error mode and adapted for controlling power control signals to change the wireless terminal from a power-on state to a power-off state.

The present invention will become more apparent from the following detailed description when taken in conjunction with the accompanying drawing in which:
FIG. 1 is a block diagram of a wireless terminal according to the present invention;
FIG. 2 is a flowchart illustrating a process of controlling power when a SIM card is removed from a wireless terminal according to the present invention; and
FIG. 3 is a signal diagram illustrating states of power control signals for controlling power of a wireless terminal when the power control signals are changed to the power on/off mode according to the present invention.

Preferred embodiments of the present invention will be described herein below with reference to the accompanying drawings. In the drawings, the same or similar elements are denoted by the same reference numerals even though they are depicted in different drawings.

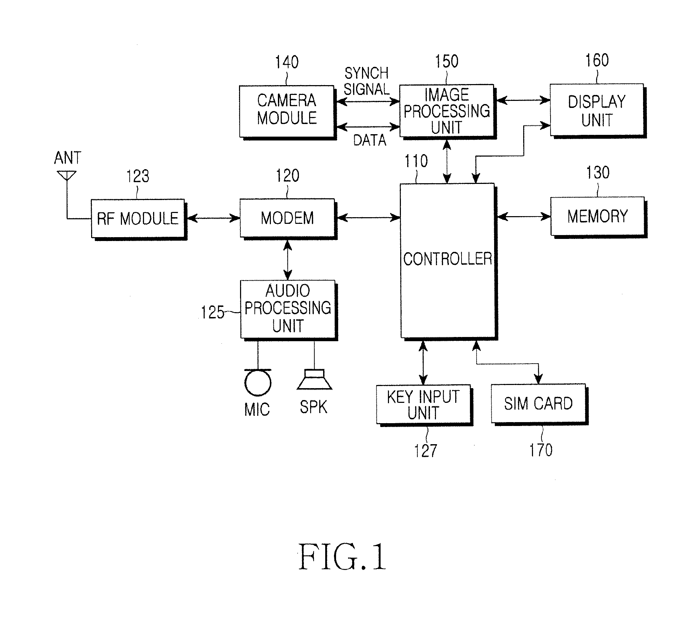

FIG. 1 is a block diagram of a wireless terminal according to the present invention. Referring to FIG. 1, a Radio Frequency (RF) module 123 performs a wireless communication function of the wireless terminal. The RF module 123 includes an RF transmitter for up-converting a frequency of a transmission signal and amplifying the up-converted transmission signal, and an RF receiver for low-noise-amplifying a received signal and down-converting a frequency of the low-noise-amplified signal. A modem 120 includes a transmitter for encoding and modulating the transmission signal and a receiver for demodulating and decoding the received signal. An audio processing unit 125 may include a codec, which includes a data codec for processing packet data and an audio codec for processing an audio signal such as a voice signal. The audio processing unit 125 converts a digital audio signal received from the modem 120 to an analog audio signal using the audio codec and reproduces the converted analog audio signal, and converts an analog audio signal generated by a microphone to a digital audio signal using the audio codec and transmits the converted digital audio signal to the modem 120. Alternatively, the codec may be included separately or in a controller 110.
A memory 130 can include a program memory and a data memory. The program memory can store programs for controlling a general operation of the wireless terminal and programs for controlling the wireless terminal to be changed to a power-off state when a SIM card 170 is removed in a power-on state of the wireless terminal according to a preferred embodiment of the present invention. The data memory temporarily stores data generated while executing the programs.

The controller 110 controls a general operation of the wireless terminal. In addition, the controller 110 may include the modem 120 and the codec. Furthermore, according to a preferred embodiment of the present invention, when the SIM card 170 is removed in the power-on state of the wireless terminal, the controller 110 automatically changes the power state of the wireless terminal to the power-off state by controlling power control signals for controlling the power of the wireless terminal to be in the power-off state.

The SIM card 170 includes a subscriber authentication module and can be inserted and removed into and from the wireless terminal. According to a preferred embodiment of the present invention, the SIM card 170 can be inserted and removed through an insertion part (not shown) disposed on the outer surface of the wireless terminal.

A camera module 140 includes a camera sensor for capturing image data and converting a captured optical signal to an electrical signal and a signal processing unit for converting an analog image signal output from the camera sensor to digital data. Herein, it is assumed that the camera sensor is a Charge Coupled Device (CCD), and the signal processing unit can be realized using a Digital Signal Processor (DSP). The camera sensor and the signal processing unit can be realized in one body or separately.

An image processing unit 150 generates screen data to display the image signal output from the camera module 140. The image processing unit 150 processes the image signal output from the camera module 140 on a per-frame basis and outputs the processed frame image data according to characteristics of a display unit 160 and the size of a screen of the display unit 160. The image processing unit 150, including an image codec, encodes the frame image data to be displayed on the display unit 160 in a predetermined method and decodes the encoded frame image data to the original frame image data. Herein, the image codec can be a JPEG codec, an MPEG4 codec, or a Wavelet codec. It is assumed that the image processing unit 150 has an On-Screen Display (OSD) function, and the image processing unit 150 can output OSD data according to the size of the screen under the control of the controller 110.

The display unit 160 displays the frame image data input from the image processing unit 150 and user data input from the controller 110 on the screen. The display unit 160 can be comprised of a Liquid Crystal Display (LCD), and in this case, the display unit 160 can include an LCD controller, a memory for storing image data, and an LCD display component. If the LCD is realized with a touch screen scheme, the display unit 160 can serve as an input unit. According to a preferred embodiment of the present invention, when the SIM card 170 is removed in the power-on state of the wireless terminal, the display unit 160 can display a message that power is turned off. A key-input unit 127 includes keys for inputting character and number information and function keys for setting various functions.

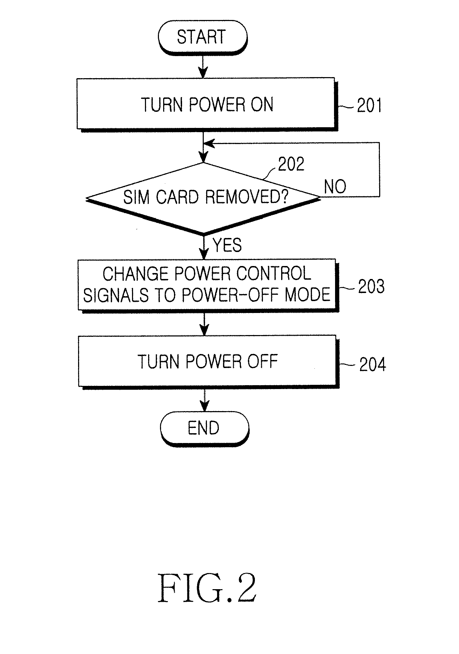

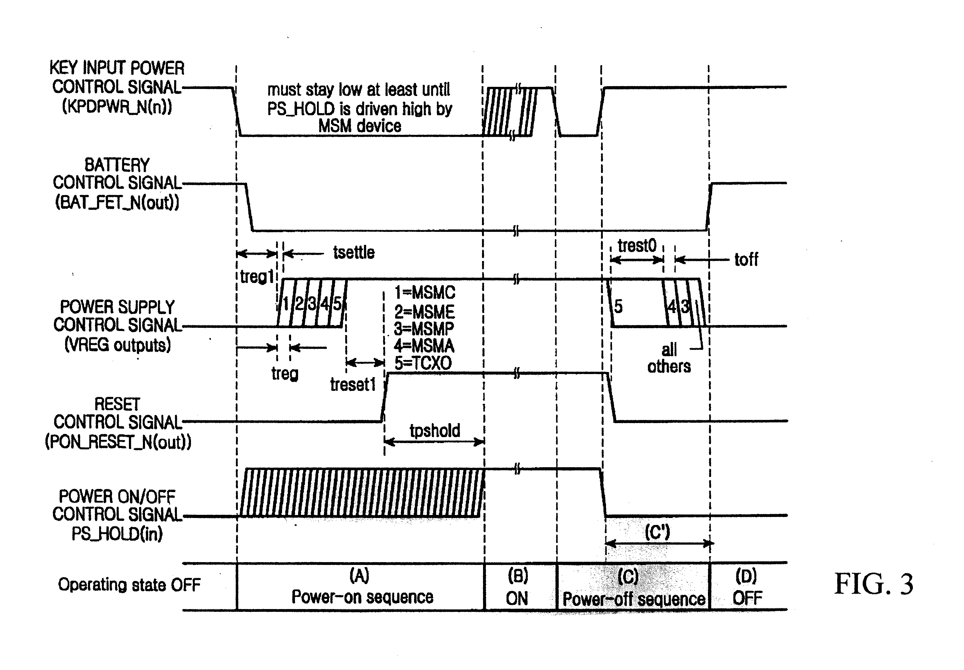

An operation of controlling power when the SIM card 170 is removed from the wireless terminal will now be described in detail with reference to FIGs. 2 and 3. FIG. 2 is a flowchart illustrating a process of controlling power when a SIM card is removed from a wireless terminal according to the present invention.

Referring to FIG. 2, power of the wireless terminal is turned on in step 201. In the power-on state of the wireless terminal, the controller 110 determines in step 202 whether the SIM card 170 inserted through the insertion part disposed on the outer surface of the wireless terminal is removed.

If the SIM card 170 is removed in the power-on state of the wireless terminal, the controller 110 senses an error mode using an interrupt of a modem chip (not shown) and controls power control signals for controlling power of the wireless terminal to be changed to a power-off mode in step 203.

By controlling the power control signals, i.e., a power on/off control signal PS_HOLD(in) (SEE FIG. 3), a key input power control signal KPDPWR_N(in), a battery control signal BAT_FET_IN(out), a power supply control signal VREG outputs, and a reset control signal PON_RESET_N(out), to be changed to the power-off mode, the controller 110 controls the power of the wireless terminal to automatically change to a power-off state in step 204.

While performing an operation of changing the power control signals to the power-off mode in step 203, the controller 110 can control the display unit 160 to display a message that the power of the wireless terminal is being turned off.

An operation of changing the power of the wireless terminal to the power-off state by changing the power control signals to the power-off mode in steps 203 and 204 will now be described in detail with reference to FIG. 3. FIG. 3 is a signal diagram illustrating states of power control signals for controlling power of a wireless terminal when the power control signals are changed to the power on/off mode according to the present invention.

Referring to FIG. 3, the power control signals for controlling the power of the wireless terminal include the power on/off control signal PS_HOLD(in), the key input power control signal KPDPWR_N(in), the battery control signal BAT_FET_N(out), the power supply control signal VREG outputs, and the reset control signal PON_RESET_N(out).

If a specific key for turning on the power of the wireless terminal is selected, the controller 110 controls the power control signals to be in an operating state of a period (A), and, as a result, the power of the wireless terminal is in the power-on state in a period (B). The period (B) corresponds to step 201 of FIG. 2, indicating the power-on state of the wireless terminal.

In period (A), the controller 110 controls the key input power control signal KPDPWR_N(in) to definitely stay low until the power on/off control signal PS_HOLD(in) stays high. The controller 110 also controls the battery control signal BAT_FET_N(out) to be changed to low, controls MSMC, MSME, MSMP, MSMA, and TCXO, which are voltage types of the power supply control signal VREG outputs, to be sequentially turned on, and controls the reset control signal PON_RESET_N(out) to stay low for a predetermined time and then stay high. The power control signals are in the operating state of period (A) at the same time.

Preferably, if the SIM card 170 is removed in the power-on state of the wireless terminal as in the period (B), the controller 110 controls the power control signals to be in an operating state of a period (C') in a period (C), and as a result, the power of the wireless terminal transitions to the power-off state in a period (D). Period (C') corresponds to step 203 of FIG. 2, indicating an operation of changing to the power-off mode, and period (D) corresponds to step 204 of FIG. 2, indicating an operation of turning off the power of the wireless terminal.

In period (C'), the controller 110 controls the power on/off control signal PS_HOLD(in) to change to low and the key input power control signal KPDPWR_N(in) to change to high. The controller 110 also controls the battery control signal BAT_FET_N(out) to stay low, controls MSMC, MSME, MSMP, MSMA, and TCXO, which are the voltage types of the power supply control signal VREG outputs, to be sequentially turned off in reverse order, and controls the reset control signal PON_RESET_N(out) to stay low. The power control signals are in the operating state of period (C') at the same time.

As described above, in the present invention, if the SIM card 170 is removed in the power-on state of the wireless terminal, the power of the wireless terminal is controlled to turn off in period (D) by automatically changing the power control signals to the power-off mode as in period (C').

As described above, according to the present invention, by automatically changing power of a wireless terminal to a power-off state when a SIM card is removed in a power-on state of the wireless terminal, an abnormal system operation or a program error can be prevented, thereby stabilizing a system.

While the invention has been shown and described with reference to a certain preferred embodiment thereof, it will be understood by those skilled in the art that various changes in form and details may be made therein without departing from the scope of the invention as defined by the appended claims.

## Claims

1. A method of controlling power in a wireless terminal having a SIM card (170) which can be directly inserted/removed, the method comprising:
determining whether the SIM card (170) is removed in a power-on state (B) of the wireless terminal; and
if the SIM card (170) is removed from the wireless terminal in the power-on state (B), a controller (110) senses an error mode using an interrupt and controls power control signals for controlling power of the wireless terminal to be changed to a power-off state (D).

2. The method of claim 1, wherein the power-off state (D) of the wireless terminal is achieved by changing power control signals for controlling the power of the wireless terminal to a power-off mode (C').

3. The method of claim 2, wherein the power control signals of the wireless terminal comprise a power on/off control signal, a key input power control signal, a battery control signal, a power supply control signal, and a reset control signal.

4. A wireless terminal for carrying out the method according to one of claims 1 to 3 comprising a controller adapted for determining whether a SIM card (170) is removed from the wireless terminal, adapted for sensing an error mode and adapted for controlling power control signals to change the wireless terminal from a power-on state (B) to a power-off state (D).

## Patentansprüche

1. Verfahren zum Steuern von Strom in einem drahtlosen Endgerät, das eine SIM-Karte (170) hat, die direkt eingesetzt / entfernt werden kann, das Verfahren umfassend:
Feststellen ob die SIM-Karte (170) in einem eingeschalteten Zustand (B) des drahtlosen Endgerätes entfernt ist; und
falls die SIM-Karte (170) von dem drahtlosen Endgerät im eingeschalteten Zustand (B) entfernt ist, erkennt ein Steuergerät (110) einen Fehlermodus unter Verwendung eines Interrupts und kontrolliert Stromsteuersignale zum Steuern von Strom des drahtlosen Endgerätes, um es in einen ausgeschalteten Zustand (D) zu schalten.

2. Verfahren gemäß Anspruch 1, wobei der ausgeschaltete Zustand (D) des drahtlosen Endgerätes dadurch erreicht wird, Stromsteuersignale zum Steuern des Stroms des drahtlosen Endgerätes in einen Strom-Aus-Modus (C') zu schalten.

3. Verfahren gemäß Anspruch 2, wobei die Stromsteuersignale des drahtlosen Endgerätes ein Strom-An/Aus-Steuersignal, ein Tastatureingabe-Stromsteuersignal, ein Batteriesteuersignal, ein Stromquellen-Steuersignal, und ein Rücksetz-Steuersignal umfassen.

4. Drahtloses Endgerät zum Ausführen des Verfahrens entsprechend einem der Ansprüche 1 bis 3, umfassend eine Steuereinheit, die ausgebildet ist zum Feststellen ob eine SIM-Karte (170) von dem drahtlosen Endgerät entfernt ist, ausgebildet zum Erkennen eines Fehlermodus und ausgebildet zum Steuern von Stromsteuersignalen, um das drahtlose Endgerät von einem eingeschalteten Zustand (B) in einen ausgeschalteten Zustand (D) zu schalten.

## Revendications

1. Procédé de contrôle de l'alimentation dans un terminal sans fil possédant une carte SIM (170) qui peut être directement insérée/retirée, le procédé comprenant :
déterminer si la carte SIM (170) est retirée dans un état sous tension (B) du terminal sans fil ; et
si la carte SIM (170) est retirée du terminal sans fil dans l'état sous tension (B), un contrôleur (110) détecte un mode d'erreur en utilisant une interruption et contrôle des signaux de contrôle d'alimentation pour contrôler l'alimentation du terminal sans fil devant être convertie en un état hors tension (D).

2. Procédé selon la revendication 1, dans lequel l'état hors tension (D) du terminal sans fil est réalisé par la conversion de signaux de contrôle d'alimentation pour contrôler l'alimentation du terminal sans fil en un mode hors tension (C').

3. Procédé selon la revendication 2, dans lequel les signaux de contrôle d'alimentation du terminal sans fil comprennent un signal de contrôle d'alimentation on/off, un signal de contrôle d'alimentation d'entrée de clé, un signal de contrôle de batterie, un signal de contrôle de source d'alimentation, et un signal de contrôle de réinitialisation.

4. Terminal sans fil pour l'exécution du procédé selon l'une des revendications 1 à 3 comprenant un contrôleur adapté pour déterminer si la carte SIM (170) est retirée du terminal sans fil, adapté pour détecter un mode d'erreur et adapté pour contrôler des signaux de contrôle d'alimentation pour convertir le terminal sans fil d'un état sous tension (B) en un état hors tension (D).
